# EUROPEAN PATENT APPLICATION

(11) **EP 4 270 357 A1**
(43) Date of publication of application: **01.11.2023**
(21) Application number: 21934835.6
(22) Date of filing: 30.03.2021
(51) Int. Cl.: G08G 1/16, B60W 40/02

(54) **IMAGE PROCESSING DEVICE, IMAGE PROCESSING METHOD, AND PROGRAM**

(71) Applicant: NEC Corporation, 108-8001 Tokyo (JP)
(72) Inventor: MISHIMA Yoshihiro, Tokyo 108-8001 (JP)
(74) Representative: Vossius & Partner Patentanwälte Rechtsanwälte mbB
(86) International application number: PCT/JP2021/013581
(87) International publication number: WO 2022/208664

(57) **Abstract**

Among multiple different area classes designated regarding photographic subjects, to which area class a photographic subject of each pixel in a captured image that has been acquired belongs is recognized. From depth map information corresponding to the captured image, range information of each pixel in an area in the captured image representing a vehicle area class among the multiple different area classes is acquired, and a position at which the range information is discontinuous is determined to be a boundary between different vehicles.

## Description

### TECHNICAL FIELD

The present invention relates to an image processing device, an image processing method, and a program.

### BACKGROUND ART

As technologies for recognizing vehicles appearing in images, the use of vehicle recognition models obtained by pattern matching or machine learning are known. As a related technology, Patent Document 1 discloses technology in which two devices, i.e., a camera and a laser radar, are used to determine vehicle location areas based on the overlap between vehicle location areas detected by the respective devices.

### CITATION LIST

### Patent Literature

[Patent Document 1] Japanese Unexamined Patent Application Publication No. Hei 08-329393

### SUMMARY OF THE INVENTION

### Problems to be solved by the Invention

Meanwhile, when recognizing heavy-duty vehicles, there are cases in which recognition fails because machine learning cannot be performed well due to the heavy-duty vehicles being too large to fit within the images or due to the heavy-duty vehicles carrying various kinds of cargo. Therefore, there is a demand for technologies for recognizing vehicles that cannot be recognized by pattern matching or machine learning using images.

Thus, an objective of the present invention is to provide an image processing device, an image processing method, and a program that solve the abovementioned problem.

### Means for Solving the Problems

According to a first aspect of the present invention, an image processing device is provided with area recognizing means for recognizing, among multiple different area classes designated regarding photographic subjects, an area class to which a photographic subject of each pixel in a captured image that has been acquired belongs; and vehicle detecting means for acquiring, from depth map information corresponding to the captured image, range information of each pixel in an area in the captured image representing a vehicle area class among the multiple different area classes, and determining a position at which the range information is discontinuous to be a boundary between different vehicles.

According to a second aspect of the present invention, an image processing method involves recognizing, among multiple different area classes designated regarding photographic subjects, an area class to which a photographic subject of each pixel in a captured image that has been acquired belongs; and acquiring, from depth map information corresponding to the captured image, range information of each pixel in an area in the captured image representing a vehicle area class among the multiple different area classes, and determining a position at which the range information is discontinuous to be a boundary between different vehicles.

According to a third aspect of the present invention, a program makes a computer in an image processing device function as area recognizing means for recognizing, among multiple different area classes designated regarding photographic subjects, an area class to which a photographic subject of each pixel in a captured image that has been acquired belongs; and vehicle detecting means for acquiring, from depth map information corresponding to the captured image, range information of each pixel in an area in the captured image representing a vehicle area class among the multiple different area classes, and determining a position at which the range information is discontinuous to be a boundary between different vehicles.

### Advantageous Effects of Invention

The present invention can recognize vehicles that cannot be recognized by pattern matching or machine learning using images.

### BRIEF DESCRIPTION OF THE DRAWINGS

[FIG. 1] A diagram schematically illustrating an image processing system according to the present embodiment.
[FIG. 2] A hardware configuration diagram of an image processing device according to the present embodiment.
[FIG. 3] Afunctional block diagram of the image processing device according to the present embodiment.
[FIG. 4] A diagram illustrating a summary of the processing in the image processing device according to the present embodiment.
[FIG. 5] A diagram indicating the processing flow in the image processing device according to the present embodiment.
[FIG. 6] A diagram illustrating a minimum configuration of the image processing device according to the present embodiment.
[FIG. 7] A diagram indicating the processing flow in the image processing device with the minimum configuration according to the present embodiment.

### EXAMPLE EMBODIMENT

Hereinafter, an image processing device according to an embodiment of the present invention will be explained with reference to the drawings.

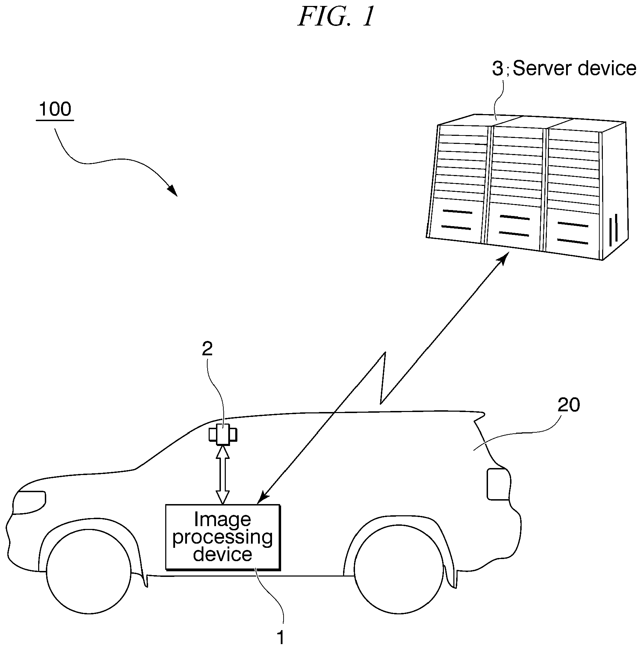

FIG. 1 is a diagram schematically illustrating an image processing system including an image processing device according to the present embodiment.

As illustrated in FIG. 1, the image processing system 100 is constituted by an image processing device 1 and a camera 2 mounted on a vehicle 20 being connected by a wireless communication network or a wired communication network. The image processing system 100 may include a server device 3. The server device 3 may be communicably connected with the image processing device 1 and the camera 2. In the present embodiment, the camera 2 captures images including a road and vehicles traveling on said road. The camera 2 outputs the images to the image processing device 1. The image processing device 1 recognizes, using images acquired from the camera 2, vehicles appearing in the images.

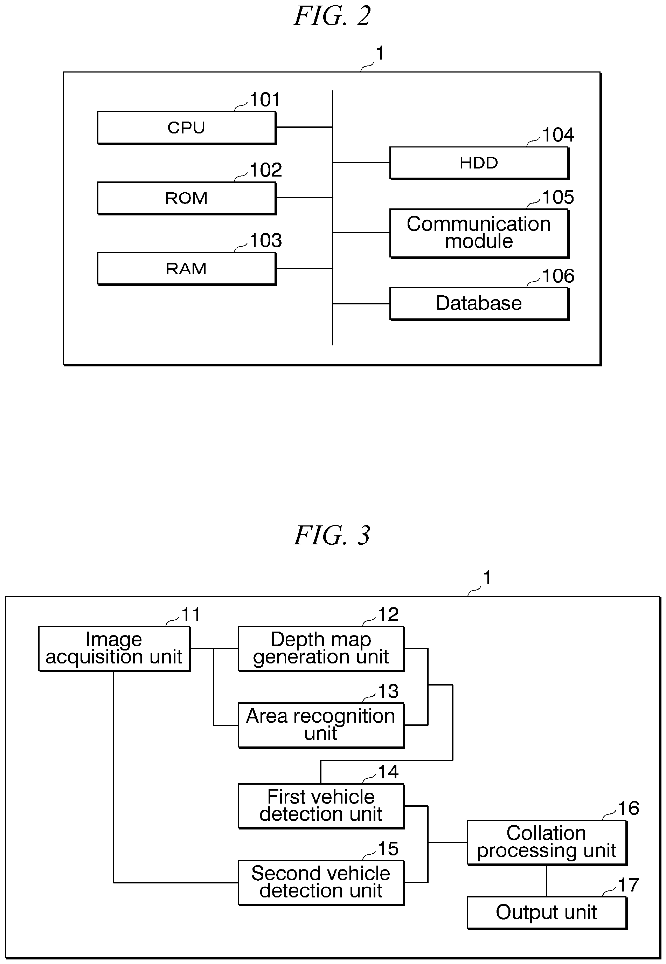

FIG. 2 is a hardware configuration diagram of the image processing device.

As illustrated in this drawing, the image processing device 1 is a computer provided with hardware such as a CPU (Central Processing Unit) 101, a ROM (Read-Only Memory) 102, a RAM (Random Access Memory) 103, an HDD (Hard Disk Drive) 104, a communication module 105, and a database 106. The server device 3 is also provided with a similar configuration.

FIG. 3 is a functional block diagram of an image processing device.

When a power source is turned on based on the starting of the vehicle 20, the image processing device 1 is activated and executes a pre-stored image processing program. Due to this program, the image processing device 1 performs the functions of an image acquisition unit 11, a depth map generation unit 12, an area recognition unit 13, a first vehicle detection unit 14, a second vehicle detection unit 15, a collation processing unit 16, and an output unit 17.

The image acquisition unit 11 acquires images from the camera 2.

The depth map generation unit 12 generates depth map information using the images acquired from the camera 2. The depth map information is information retaining, for each pixel in an image, range information from the camera 2 to photographic subjects based on the images acquired from the camera 2.

The area recognition unit 13 recognizes, among multiple different area classes designated regarding the photographic subjects, to which area class a photographic subject of each pixel in the acquired image belongs.

The first vehicle detection unit 14 acquires, from the depth map information, the range information for each pixel in an area in the image representing a vehicle area class, determines positions at which the range information becomes discontinuous to be boundaries between different vehicles, and identifies a single-vehicle area based on those boundaries and the range information indicated by each pixel representing the vehicle area class.

The second vehicle detection unit 15 identifies, using a vehicle recognition model obtained by pattern matching or machine learning, the vehicle areas appearing in the captured image or in the depth map information.

The collation processing unit 16 identifies each vehicle area appearing in the captured image based on the recognition results from the first vehicle detection unit 14 and the second vehicle detection unit 15.

The output unit 17 outputs the processing result from the collation processing unit 16.

The first vehicle detection unit 14 excludes the single-vehicle area from the vehicle areas when, based on the positional relationship between the single-vehicle area and an area in an area class representing a road among the area classes, the single-vehicle area is not adjacent to an area in an area class representing a road. Additionally, the first vehicle detection unit 14 determines whether the size of the single-vehicle area is a size corresponding to that of a vehicle, and excludes the single-vehicle area from the vehicle areas if the size does not correspond to that of a vehicle.

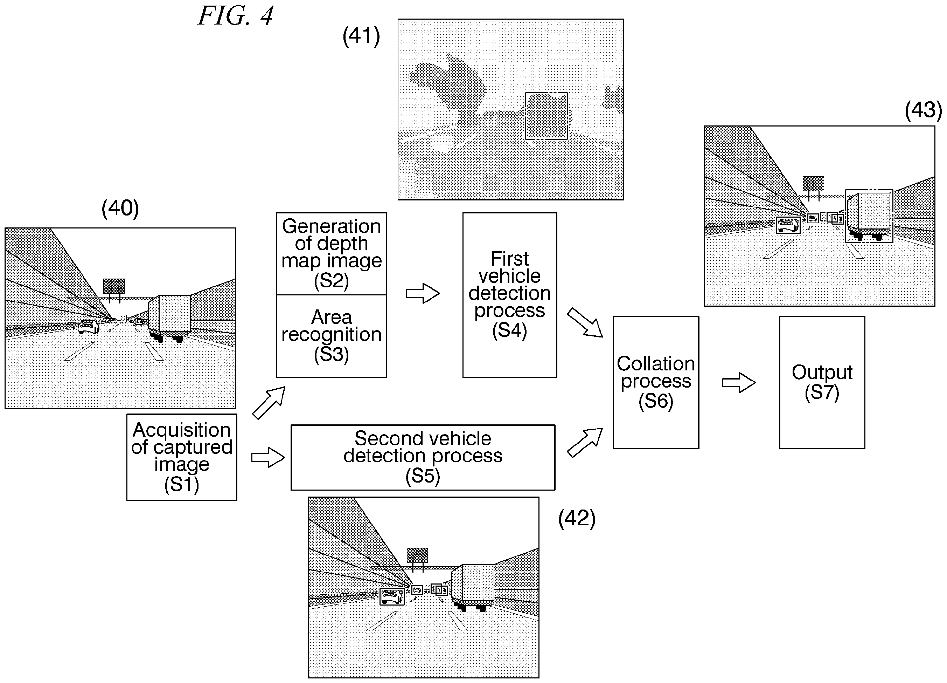

FIG. 4 is a diagram illustrating a summary of the processing in the image processing device.

FIG. 4 illustrates a captured image (40) that the image processing device 1 has acquired from the camera, a processing result (41) from the processing (first vehicle detection process) in the first vehicle detection unit 14, a processing result (42) from the processing (second vehicle detection process) in the second vehicle detection unit 15, and a processing result (43) from the collation process. In the processing result (41) from the first vehicle detection process, a truck is recognized. The image processing device 1 acquires the captured image (S1). The depth map generation unit 12 generates, using the captured image, depth map information (S2), and recognizes, among multiple different area classes designated regarding objects appearing in the captured image, to which area class each pixel in the captured image belongs (S3). The image processing device 1 performs the first vehicle detection process (S4). In this first vehicle detection process, it is possible to detect, for example, heavy-duty vehicles and the like, which are difficult to recognize by the second vehicle detection process. The image processing device 1 performs the second vehicle detection process (S5). It is assumed that vehicles other than heavy-duty vehicles are able to be detected in the second detection image. The image processing device 1 generates, using the processing result (41) from the first vehicle detection process and the processing result (42) from the second vehicle detection process, a vehicle recognition result (43) that includes the vehicle areas recognized in each image in an overlapping manner (S6). The image processing device 1 outputs the vehicle recognition result (43). The output destination may be a storage device such as a database 106.

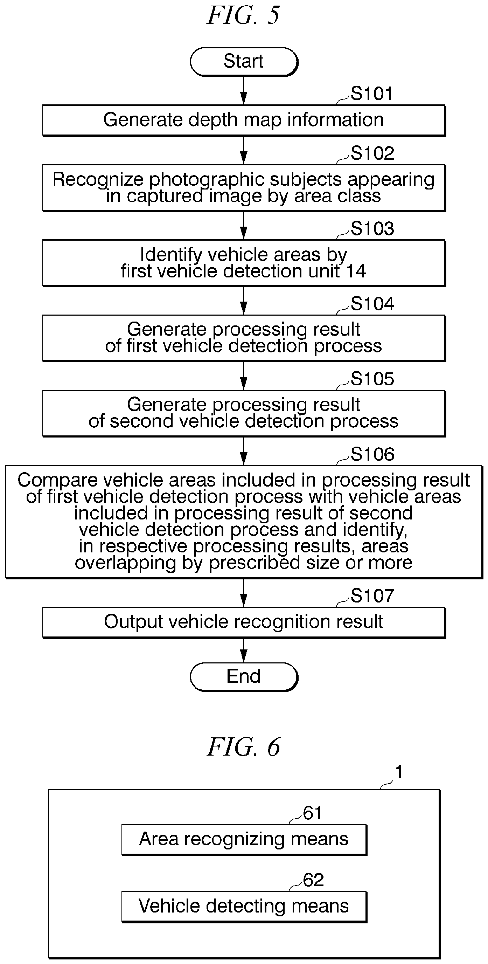

FIG. 5 is a diagram indicating the processing flow in the image processing device.

Hereinafter, the processing flow in the image processing device 1 will be explained in order.

While the vehicle 20 is traveling, the camera 2 outputs captured images generated by image capture to the image processing device 1. The image acquisition unit 11 in the image processing device 1 acquires the images and outputs them to the depth map generation unit 12. The depth map generation unit 12 generates depth map information based on the captured images that have been acquired (step S101). The image acquisition unit 11 may acquire depth map information generated by the camera 2 in advance. In this case, the depth map generation unit 12 does not need to be provided in the image processing device 1. The depth map information is an image in which the pixels in the image include information regarding the ranges from the camera 2 to photographic subjects. The depth map information may be generated by known technology. The depth map generation unit 12 outputs the depth map information to the first vehicle detection unit 14.

The area recognition unit 13 acquires a captured image and depth map information. The area recognition unit 13 recognizes photographic subjects appearing in the captured image by area class, such as sky, wall, road, moving body (traffic participant), person, etc. (step S102). The technology by which the area recognition unit 13 recognizes the captured image by area classes representing multiple different targets may be a known technology. During this process, the area recognition unit 13 generates area recognition information retaining the probability that each pixel in the captured image belongs to each area class. The area recognition information is array information of the probability information by area class for each pixel in the captured image. The area recognition unit 13 outputs the probability information, by area class, for each pixel to the first vehicle detection unit 14.

The area recognition unit 13 may calculate the probability by area class for each pixel in the captured image by using an area class calculation model that receives a captured image as an input and that outputs the probabilities of belonging to multiple predefined area classes. The area class calculation model may, for example, be a model that has undergone machine learning by taking many images as inputs, and with information indicating the area class of each pixel in those images as correct data, has learned the relationship therebetween.

The first vehicle detection unit 14 acquires the captured image and the depth map information including the probability information by area class for each pixel in the captured image. The first vehicle detection unit 14 identifies an area of pixels estimated to correspond to a vehicle by the probability for the vehicle area class being equal to or higher than a threshold value in the captured image. This area will be referred to as an estimated vehicle area. The first vehicle detection unit 14, for each pixel included in the estimated vehicle area, compares the range information with those of adjacent pixels, and determines whether the range differences between the adjacent pixels are equal to or less than a prescribed range difference by which the pixels can be assumed to correspond to the same object. The first vehicle detection unit 14 identifies, as single-vehicle area, a group of adj acent pixels for which the range differences between the adjacent pixels are equal to or less than a prescribed range difference by which the pixels can be assumed to correspond to the same object (step S103). Additionally, the first vehicle detection unit 14 may identify, in the estimated vehicle area, adjacent pixels for which the range differences between the adjacent pixels are equal to or greater than the prescribed range difference by which the pixels can be assumed to correspond to the same object, and determine that those adjacent pixels correspond to a boundary between a vehicle and another vehicle, or a boundary between a vehicle and another target, thereby identifying a single-vehicle area. This process is one mode of the process by which the image processing device 1 acquires range information of each pixel in an area in the captured image representing a vehicle area class, and determines a position at which the range information is discontinuous to be a boundary between different vehicles,

The first vehicle detection unit 14 may exclude the single-vehicle area from the vehicle areas when, based on the positional relationship between the singe-vehicle area identified in the process described above and an area in an area class representing a road, the single-vehicle area is not adjacent to an area in an area class representing a road. The first vehicle detection unit 14 determines whether the probability that a pixel below a pixel constituting the lower edge of a rectangular region indicating a single-vehicle area belongs to an area in the area class representing a road is equal to or greater than a threshold value. As one example, upon determining that the probability that a pixel adjacent to below a pixel constituting the lower edge of a rectangular region indicating a single-vehicle area belongs to the area class representing a road is equal to or greater than a threshold value, the first vehicle detection unit 14 determines that the single-vehicle area is adjacent to an area in the area class representing a road. Additionally, as one example, upon determining that the probability that a pixel adjacent to below a pixel constituting the lower edge of a rectangular region indicating a single-vehicle area belongs to the area class representing a road is less than the threshold value, the first vehicle detection unit 14 determines that the single-vehicle area is not adjacent to an area in an area class representing a road.

The first vehicle detection unit 14 compares an edge length of the rectangular region including the single-vehicle area identified by the process described above with a range of edge lengths of sizes corresponding to a vehicle. When the edge length of the rectangular region including the single-vehicle area identified by the process described above is not included within the range of edge lengths of sizes corresponding to a vehicle, the first vehicle detection unit 14 may determine that the area indicated by the rectangular region is not a vehicle area, and may exclude that area from among the vehicle areas.

The first vehicle detection unit 14 generates a processing result (41) from the first vehicle detection process including coordinate information of a rectangular region indicating an area finally identified as a single-vehicle area (step S 104). In the case in which multiple vehicles appear in a single captured image, the first vehicle detection unit 14 may generate a processing result from the first vehicle detection process including coordinate information for the rectangular regions of each of the multiple vehicle areas by a similar process. The first vehicle detection unit 14 outputs the processing result (41) from the first vehicle detection process to the collation processing unit 16. According to the process in the first vehicle detection unit 14, by using the depth map information and the information regarding the area class of each pixel in the captured image, it is possible to detect special-purpose vehicles, heavy-duty vehicles that are traveling nearby, vehicles that are partially hidden, etc., which are difficult to recognize by pattern matching or by machine learning.

Simultaneously with the first vehicle detection process in the first vehicle detection unit 14, the second vehicle detection unit 15 acquires the captured image from the image acquisition unit 11 and performs a second vehicle detection process. Specifically, the second vehicle detection unit 15 identifies vehicle areas appearing in the captured image by using pattern matching technology. Alternatively, the second vehicle detection unit 15 inputs the captured image that has been acquired to a vehicle recognition model generated by machine-learning vehicles appearing in captured images in a machine learning process performed in the past. The second vehicle detection unit 15 acquires a vehicle recognition result after the captured image has been input to the vehicle recognition model. The second vehicle detection unit 15 identifies vehicle areas appearing in the captured image recorded in the vehicle recognition result. The second vehicle detection unit 15 may detect multiple vehicle areas in the captured image. The second vehicle detection unit 15 generates a processing result (42) from the second vehicle detection process including coordinate information of rectangular regions indicating areas identified as vehicle areas (step S105). The second vehicle detection unit 15 outputs the processing result (42) from the second vehicle detection process to the collation processing unit 16.

The collation processing unit 16 acquires the processing result (41) from the first vehicle detection process and the processing result (42) from the second vehicle detection process. The collation processing unit 16 compares the vehicle areas included in the processing result (41) from the first vehicle detection process with the vehicle areas included in the processing result (42) from the second vehicle detection process, and identifies, in each processing result, areas overlapping by a prescribed size or more (step S 106). Upon identifying vehicle areas overlapping by the prescribed size or more in the processing result (41) from the first vehicle detection process and the processing result (42) from the second vehicle detection process, the collation processing unit 16 determines that they are a single vehicle area. The areas overlapping by the prescribed size or more when comparing the respective detection results may, as one example, be areas such that, in a state in which the corresponding vehicle areas in the captured image indicated by the respective detection results are superimposed, the positions of those areas are substantially the same and the areas overlap by a prescribed area or larger, or they may be areas for which the rectangles of vehicle areas identified for each area overlap by a prescribed percentage or more.

The collation processing unit 16 outputs, to the output unit 17, a vehicle recognition result including the captured image, the coordinates in the image representing the area(s) (rectangle(s)) of a single or multiple vehicles identified in only the processing result (41) from the first vehicle detection process, the coordinates in the image representing the area(s) (rectangle(s)) of a single or multiple vehicles identified in only the processing result (42) from the second vehicle detection process, and the coordinates in the image representing areas determined to be single-vehicle areas overlapping by a prescribed size or larger in the processing result (41) from the first vehicle detection process and the processing result (42) from the second vehicle detection process (step S 107). The output unit 17 records the vehicle recognition results in the database 106. As a result thereof, a user can check the captured image and the vehicle areas recognized respectively by the first vehicle detection process and the second vehicle detection process in the captured image based on the vehicle recognition results.

Based on the coordinates of the vehicle areas included in the vehicle recognition results acquired from the collation processing unit 16, the output unit 17 may generate and output a recognition result image in which the colors of rectangles representing said areas in the captured image are updated to be in a highlighting color, or may generate and output a recognition result image in which images of rectangles enclosing said areas in the captured image are overlaid on the captured image. The output destination of the vehicle recognition results and the recognition result image from the output unit 17 may be the server device 3, another display device, a user terminal or the like.

According to the process described above, the image processing device 1 provided in a vehicle performs the process described above. However, a drive recorder provided with the camera 2 or an external server device 3 may have functions similar to those of the image processing device 1, and may identify vehicle areas in captured images in the same manner as the process described above.

FIG. 6 is a diagram illustrating the minimum configuration of the image processing device.

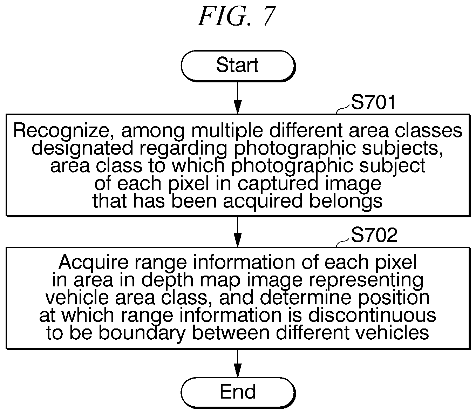

FIG. 7 is a diagram indicating the processing flow in the image processing device with the minimum configuration.

The image processing device 1 is provided with at least an area recognizing means 61 and a vehicle detecting means 62.

The area recognizing means 61 recognizes, among multiple different area classes designated regarding photographic subjects, to which area class a photographic subject of each pixel in a captured image that has been acquired belongs (step S701).

The vehicle detecting means 62 acquires range information of each pixel in an area, in depth map information, indicating a vehicle area class among multiple different area classes, and determines a position at which the range information is discontinuous to be a boundary between different vehicles (step S702).

The respective devices described above have internal computer systems. Furthermore, the steps in the respective processes described above are stored, in the form of a program, in a computer-readable recording medium, and the processes described above are performed by a computer reading and executing this program. In this case, a computer-readable recording medium refers to a magnetic disk, a magneto-optic disk, a CD-ROM, a DVD-ROM, a semiconductor memory, or the like. Additionally, this computer program may be transmitted to a computer by means of a communication line, and the computer that has received this transmission may execute said program.

Additionally, the program described above may be for realizing just some of the aforementioned functions. Furthermore, it may be a so-called difference file (difference program) that can realize the aforementioned functions by being combined with a program already recorded in a computer system.

### [Reference Signs List]

- 1: Image processing device
- 2: Camera
- 3: Server device
- 11: Image acquisition unit
- 12: Depth map generation unit
- 13: Area recognition unit
- 14: First vehicle detection unit
- 15: Second vehicle detection unit
- 16: Collation processing unit
- 17: Output unit

## Claims

1. An image processing device comprising:
area recognizing means for recognizing, among multiple different area classes designated regarding photographic subjects, to which area class a photographic subject of each pixel in a captured image that has been acquired belongs; and
vehicle detecting means for acquiring, from depth map information corresponding to the captured image, range information of each pixel in an area in the captured image representing a vehicle area class among the multiple different area classes, and determining a position at which the range information is discontinuous to be a boundary between different vehicles.

2. The image processing device according to claim 1, comprising:
depth map generating means for generating, based on the captured image acquired from the image capture device, the depth map information retaining, for each pixel in the captured image, range information from the image capture device to photographic subjects appearing in the captured image.

3. The image processing device according to claim 1 or claim 2, wherein:
the vehicle detecting means identifies a single-vehicle area based on the discontinuous position and the range information indicated by each pixel in the area representing the vehicle area class.

4. The image processing device according to claim 3, wherein:
the vehicle detecting means excludes the single-vehicle area from the vehicle area when, based on a positional relationship between the single-vehicle area and an area in an area class representing a road among the area classes, the single-vehicle area is not adjacent to the area in an area class representing a road.

5. The image processing device according to any one of claim 1 to claim 4, wherein:
the vehicle detecting means determines whether a size of the single-vehicle area is a size corresponding to a vehicle, and excludes the single-vehicle area from the vehicle area if the size does not correspond to that of a vehicle.

6. An image processing method that comprises:
recognizing, among multiple different area classes designated regarding photographic subjects, to which area class a photographic subject of each pixel in a captured image that has been acquired belongs; and
acquiring, from depth map information corresponding to the captured image, range information of each pixel in an area in the captured image representing a vehicle area class among the multiple different area classes, and determining a position at which the range information is discontinuous to be a boundary between different vehicles.

7. A program that makes a computer in an image processing device function as:
area recognizing means for recognizing, among multiple different area classes designated regarding photographic subjects, to which area class a photographic subject of each pixel in a captured image that has been acquired belongs; and
vehicle detecting means for acquiring, from depth map information corresponding to the captured image, range information of each pixel in an area in the captured image representing a vehicle area class among the multiple different area classes, and determining a position at which the range information is discontinuous to be a boundary between different vehicles.
